# EUROPEAN PATENT APPLICATION

(11) **EP 4 618 206 A1**
(43) Date of publication of application: **17.09.2025**
(21) Application number: 24163709.9
(22) Date of filing: 15.03.2024
(51) Int. Cl.: H01M 8/248, H01M 8/0206, H01M 8/0221, H01M 8/0228, H01M 8/0271, H01M 8/247

(54) **ENDPLATE FOR A FUEL CELL STACK AND METHOD OF MANUFACTURING THE ENDPLATE**

(71) Applicant: AVL List GmbH, 8020 Graz (AT); AVL Fuel Cell Canada Inc, Burnaby, British Columbia V5A 4W2 (CA)
(72) Inventor: Mann, Bhagwant Tejpaul, Burnaby, 5980 (CA)
(74) Representative: Gamper, Bettina

(57) **Abstract**

The invention relates to an endplate (100) for compressing a fuel cell stack (200). The endplate (100) comprises a core (110) for providing stiffness to the endplate (100), which is made of a core-material and which comprises a core-stiffness. The endplate (100) further comprises a shell (120) with a shell-surface (121) for contact with the fuel cell stack (200). The shell (120) is made of a shell-material. The shell (120) comprises a shell-stiffness that is smaller or equal to the core-stiffness. The shell (120) is at least partially moulded over the core (110). The invention also relates to a fuel cell stack (200) that is covered on at least one side by the above-described endplate (100). The invention also relates to a method of manufacturing (500) said endplate (100).

## Description

The present invention relates to an endplate for compressing a fuel cell stack, and to a fuel cell stack comprising at least one of said endplate. The invention relates further to a method of manufacturing said endplate.

In applications that use fuel cell technology, generally stacks of fuel cells are used. These fuel cell stacks are typically provided as an assembled block of individual fuel cells that are electrically connected in series. Depending on the application, fuel cells can be operated as fuel cells or electrolytic cells, which can be based on Proton Exchange Membrane (PEM) technology, Solid Oxide Cell (SOC) technology, or other competing technologies.

Besides the fuel cells, the stack assembly includes other components for providing mechanical support, for cooling or for insulation. For instance, the fuel cell stack comprises endplates, which are provided on either side of the stack. Typically, endplates provide structural support for the stack assembly by applying pressure from both sides, thereby also ensuring gas tight sealing between the components to prevent any gases from leaking within and escaping from the stack. Endplates are typically configured to receive bolts, screws, and other mechanical elements for compressing the fuel cell stack.

Therein, an important aspect is that the endplates are to compress the fuel cell stack so that a required uniform contact pressure is applied. For instance, if the compression applied by the endplates is not uniform or is at an inadequate level, electrical contact resistance can rise locally in the stack, which could lead to local hot spots in the fuel cell stack. Also, gas diffusion in the fuel cells can be inhibited or leakages can occur.

Moreover, significantly higher pressures in electrolyser applications require endplates with increased stiffness compared to endplates in fuel cell applications. As an example, PEM electrolysers can have hydrogen pressures of 30 bar or higher, whereas PEM fuel cell stacks typically operate under 4 bar.

Endplates also provide other functionalities for the fuel cells. For instance, the endplates are often used for supplying reactant gases to the fuel cells. For this, the endplates can be provided with manifolds. Thus, sealing is often provided on surfaces of the endplates that come into contact with other components of the stack. For sealing reliably, the corresponding surface of the endplates must comply with strict engineering requirements. For instance, exact alignment with the components is crucial. Other applications in this regard are the provision of pockets in endplates for bus plates, which are used for collecting current from the fuel cells. Thus, endplates typically also provide electrical insulation. Furthermore, endplates and said bus plates may be provided with active or passive heating capability for optimal performance in cold climates, for example.

The endplates are therefore not only important for the structural integrity of the fuel cell stack but also important for the electrical performance, safety and lifespan of the fuel cells. The above illustrates the overall importance of the design of the endplates in all of this.

In the prior art, fuel cell endplates are typically provided as single injection moulded plastic parts. To meet mechanical, electrical, and chemical requirements, these single moulded plastic parts are commonly dimensioned to be relatively large and complex, thus exhibiting relatively high material thicknesses. This, however, makes it difficult to provide endplates that meet relatively strict manufacturing tolerances on dimensions and surface quality. This is because injection moulded parts with high material thicknesses are more adversely affected by warpage and shrinkage than smaller parts, which can make it difficult to comply with engineering requirements. The design as a single piece makes finishing, in particular post-machining, of surfaces difficult and even unachievable in certain cases. Additionally, the large nature of the part requires the mould to have a complex design and therefore, makes the mould costly. Consequently, the risk of part defects and costs are increased. In addition, the weight of the fuel cell stack is increased.

It is thus, an object of the invention to provide an endplate with reduced material thickness, but which still provides structural support and electrical insulation, which can be compliant with engineering requirements, and which can be produced in a high-volume production process, such as injection moulding.

The above-described problem is solved -at least partially- by the endplate of claim 1, the fuel cell stack of claim 11 and the method of manufacturing of claim 12.

Further advantages and features of the invention can be derived from the dependent claims, the description, and the figures. Features and details described in connection with the endplate of the invention naturally also apply in connection with the fuel cell stack of the invention, and with the method of the invention, and vice versa, so that, regarding disclosure of individual aspects of the invention, reference is and/or can be made always mutually.

A first aspect of the invention relates to an endplate for a fuel cell stack. The endplate is suitable for compressing the fuel cell stack. The endplate comprises a core for providing stiffness to the endplate. The core comprises a core-stiffness. The endplate further comprises a shell, which comprises a shell-surface for contact with the fuel cell stack. The shell comprises a shell-stiffness that is smaller than or equal to the core-stiffness. The shell is at least partially moulded over the core.

According to the invention the fuel cell stack and all the respective elements my preferable also be a PEM electrolysis stack or an AEM stack. Therefore, the invention also relates to an end plate for an electrolysis stack as well as a method for manufacturing an endplate for compressing an electrolysis stack.

In other words, an endplate for a fuel cell stack is provided. The endplate is designed to provide, for example, sufficient structural support in a compressed fuel cell stack. The fuel cell stack may be a proton-exchange membrane fuel cell (PEMFC) stack, a PEM electrolysis stack or an AEM stack, for instance. The fuel cells of the fuel cell stack may be operable as fuel cells and/or electrolysis cells. An "*endplate"* may be preferably understood as a plate for covering an end of a fuel cell stack in the stacking direction. The endplate may be substantially flat. The endplate may have at least one substantially flat or planar side surface. Alternatively, the endplate may have two opposite substantially flat or planar side surfaces that may be parallel to each other. Preferably, the endplate may comprise an extension height that is smaller than its extension length and extension width. The endplate may extend lengthwise and widthwise preferably in an extension plane.

Stiffness of the endplate is provided by a core of the endplate. Therein, "*stiffness"* may be preferably understood as a measure of the extent, to which an object resists deformation in response to an applied mechanical load. The stiffness of a structure may depend on its cross-sectional profile, on its material, and/or on characteristics of the load. Stiffness may be inherent to the respective structure. For example, stiffness may encompass bending stiffness, extensional stiffness, torsional stiffness, and/or shear stiffness.

The endplate comprises a shell with a shell-surface for contact with the stack. "*Contact"* may be understood as direct physical contact between surfaces of different components. The "shell-surface" may encompass all surfaces of the shell, for example including edges, sealing surfaces, openings, holes and/or bus plate pockets.

The shell is at least partially moulded over the core. Therein, the term "*over- mould"* may be understood as applying a first material (e.g. shell-material) onto a second material (e.g. core-material) in a moulding step. For instance, the first material may not only at least partially cover but also bond to the second material. For this, preferably injection moulding may be used. More specifically, overmoulding or insert moulding may be used. A chemical and/or mechanical bond between the shell and the core may be formed during the moulding step.

Thus, by providing the endplate as a hybrid part with two different stiffnesses, the stiffness of the endplate can be improved without increasing material thickness or dimensions. This results, inter alia, from the idea that a certain stiffness is assigned to a specific section of the endplate in accordance with a required functionality. Thereby, individual sections can be provided that are optimized with regards to their respective function in the endplate. According to the invention, the core can be seen as the main stiffener component and is stiffer than the shell. Accordingly, the shell can be provided with minimal stiffness requirements. By moulding one over the other, a synergistic combination of the advantages of the individual elements of the endplate is achieved so that, inter alia, material usage, manufacturing costs and number of reject parts can be reduced, and higher manufacturing tolerances and component strength can be achieved. Unlike a simple coating of the core, providing the shell by moulding provides additional mechanical support, provides electrical and chemical shielding, and adds in conjunction with the core to the overall functionality of the endplate.

This is, for instance, because in accordance with the above design, the core can be manufactured completely separately from the shell and in correspondence to its structural complexity. Due to the core being moulded over by the shell, there is no requirement for the core to be electrically insulating, thus making a wider range of material choices available to optimize the core. In addition, any imperfections in the core can be filled in by the shell as part of the over-moulding process. Consequently, strict tolerances for the core do not need to be observed. Equally, materials for the shell can be selected without considering aspects of stiffening the endplate since the core acts as the main stiffener. Furthermore, the design allows to use the shell-surface as machinable surface that can be provided in compliance with engineering requirements, such as strict manufacturing tolerances. Moreover, the shell can be provided with reduced material dimensions so that the risk of warpage or shrinkage on critical surfaces, like sealing surfaces, can be reduced.

Consequently, the endplate can be optimized regarding its size, space consumption, weight, tolerances, cost, and dimensions.

According to a preferred embodiment, the core-stiffness may be a core-material stiffness and the shell-stiffness may be a shell-material stiffness. The respective material stiffnesses may be a bending stiffness of the core-material and a bending stiffness of the shell-material. For example, the core-stiffness may be at least three-times, at least ten-times or even more of the shell-stiffness. However, these are only examples and not considered a complete enumeration.

Thereby, the core, which acts as the main stiffener component, like a load distribution plate, can minimize flexural deformation while maximizing structural support.

According to a further preferred embodiment, the endplate may comprise a singular one-piece continuous structure. Alternatively or additionally, the shell may be moulded over the core such that the core is covered on at least one end by the shell-surface. Alternatively or additionally, the shell may be moulded over the core such that the core is covered at least partially or entirely along its perimeter by the shell-surface.

Thereby, the bonding strength between the shell and the core can be improved and the shell-surface can shield the core from electricity and/or substances.

According to a preferred embodiment, the shell-surface may be configured to provide a sealing surface between the endplate and a component of the fuel cell stack when the endplate is installed on the fuel cell stack. The shell-material may be a compressible and/or electrically insulating material. Preferably, the shell-material may comprise plastic, injection moulded thermoplastic, thermoformed plastic, such as polyphenylene sulphide, a composition comprising polystyrene and polyphenylene oxide, a composition comprising polystyrene and polyphenylene ether, polyether ether ketone, or an epoxy-based laminate. However, these are only examples and not considered a complete enumeration.

Thereby, a contact surface to components of the stack can be provided in a configuration that can meet strict sealing tolerances. Moreover, the endplate can provide electrical safety beside structural safety. For instance, it is undesirable for endplates to be electrically conducting if they are in direct contact with a bus plate. The above referenced materials are particularly suitable for a hydrogen fuel cell environment and are optimized regarding size, weight, thermal/electrical conductivity and post-surface processing, like machining.

According to a further preferred embodiment, the core may comprise as the core-material a non-plastic material, such as metals, like aluminium and steel. Alternatively or additionally, the core-material may be a composite containing glass and/or carbon fibre weaves. However, these are only examples and not considered a complete enumeration. Alternatively or additionally, the core-material may comprise none or at least some of the materials used for the shell. For example, the core-material may comprise plastic, injection moulded thermoplastic, thermoformed plastic, such as polyphenylene sulphide, a composition comprising polystyrene and polyphenylene oxide, a composition comprising polystyrene and polyphenylene ether, polyether ether ketone, or an epoxy-based laminate. However, these are only examples and not considered a complete enumeration. Preferably, the core may comprise the same resin as the shell. Preferably, the core may comprise a non-electrically insulating material. Preferably, the core may have a different cross-sectional profile than the shell. More preferred, the cross-sectional profile of the endplate may be closed. Most preferred, the cross-sectional profile of the shell may be complemented by the cross-sectional profile of the core to form a closed, preferably continuous, more preferred rectangular profile of the endplate.

Thereby, the core can be made from materials with high material-stiffnesses. Also, the material can be chosen to optimize weight, size and cost. A particular advantage of using similar or the same materials for both sections is that this reduces the risk of delamination by forming chemical bonds during the over-moulding.

According to a preferred embodiment, in order to provide a form fit locking connection, at least one of the core and the shell may comprise at least one engagement-section while the respective other may comprise a correspondingly complementary counter-section. Preferably, the engagement section or the counter-section may narrow or widen with increasing extension from the respective section of the endplate (i.e. the core or the shell). Alternatively or additionally, the engagement section and/or the counter-section may extend in at least two different directions. For instance, the engagement section or the counter-section may be a dovetail or a groove.

Thereby, mechanical anchoring between the core and the shell can be provided so that the risk of separation or delamination between the shell and the core can be reduced.

According to a further preferred embodiment, the endplate may comprise a top surface, a bottom surface, and a peripheral front surface extending therebetween. The shell-surface may comprise at least the top surface. The core may comprise the bottom surface.

According to a preferred embodiment, the shell may comprise, at least partially, a cross-sectional profile that is open on one side. For instance, the shell may comprise a U-shaped cross-sectional profile. Alternatively or additionally, the core may comprise, at least partially, a closed cross-sectional profile. For instance, the core may comprise a rectangular cross-sectional profile. Preferably, a contour of an inner edge of the cross-sectional profile of the shell may correspond with a contour of an outer edge of the cross-sectional profile of the core.

Thereby, the mechanical strength and, in particular, the bending stiffness of the endplate can be improved.

According to a further preferred embodiment, the endplate may comprise one or more plate features for providing functionality of the endplate in the fuel cell stack. The plate features may be comprised by the shell and/or the core. For instance, the plate features may comprise one or more ports for supplying reactant gases, a pocket for receiving a bus plate, grooves for aligning the endplate with respect to the fuel cell stack, bore holes, threaded holes, and/or grooves for receiving compression hardware, such as clamps, for compressing the stack.

Preferably, the endplate may comprise one or more supply openings that may extend longitudinally along an extension direction through the shell-surface and through the core to provide a through-passage between the top surface and the bottom surface. Preferably, the supply openings may extend on the shell surface at least partially along the perimeter of the endplate.

Thereby, ports can be provided in the endplate to supply the fuel cell stack with reactant gases or to guide the exhaust gases away from the fuel cell stack.

Preferably, the shell may comprise one or more separation walls that may define an interior surface of the supply openings. Preferably, each of the supply openings may be enclosed by a different separation wall. The core may comprise corresponding through-openings for receiving the separation walls. It is also conceivable that more than one of the separation walls may be received by one of the through-openings. Thus, for example, multiple supply openings may be formed by multiple separation walls being received in the same through-opening. Preferably, the shell-surface may comprise the interior surface.

Thereby, it is possible to define the inside of the supply openings with the shell-material. This facilitates the supply openings to be within required manufacturing tolerances and have desired chemical and/or electrical inertness. At the same time, the core can be kept simple and made of rigid materials so that high bending stiffness can be provided. At the same time, there is no need for chemical or electrical inertness for the core. Also, less strict manufacturing tolerances can be defined for the core.

Preferably, the shell-surface may comprise a recess-section that at least partially may extend inwards in a direction from the top surface towards the bottom surface.

Thereby, a pocket for a bus plate can be provided within an electrically insulating material.

A further aspect of the invention relates to a fuel cell stack. For instance, the fuel cell stack may be a solid polymer electrolyte fuel cell stack. The fuel cell stack comprises a stack of fuel cells, which are arranged in series. The stack is covered on at least one side by an endplate with any of the configurations described above.

With the fuel cell stack, the same advantages and technical benefits can be derived as described above for the endplate of the invention. In particular, the risk of gases escaping from the fuel cell stack can be lowered, and its mechanical stability and its weight can be improved.

A further aspect of the invention relates to a method of manufacturing an endplate for compressing a fuel cell stack. For instance, the endplate described hereinabove may be made with the method. In the method, a core for providing stiffness to the endplate is provided (e.g. manufactured) from a core-material. The provided core has a core-stiffness. Further, a shell with a shell-surface for contact with the fuel cell stack is formed by over-moulding the core at least partially with a shell-material. The formed shell has a shell-stiffness that is smaller or equal to the core-stiffness.

With the method, the same advantages and technical benefits can be derived as described above for the endplate of the invention. In particular, the endplate can be manufactured in a manufacturing process that is suitable for high-volume production. Furthermore, the mould used in the process can be kept small and simple, thereby improving mould flow characteristics, reducing the risk of material defects and reducing the impact of warpage and shrinkage on the finalized endplate. Moreover, the method allows the core to be manufactured in an injection moulding process to facilitate complex shapes, for instance. Also machining processes are viable options to manufacture the core. Any post-manufacturing of imperfections of the core can be filled in by the shell as part of the over-moulding process. Thereby, manufacturing costs can be kept low and the endplate can be provided as a single solid piece, with one section (i.e. shell, core) formed over the other.

According to a preferred embodiment, in the method, the core may be provided by processing a bulk material. For instance, the core may be machined or cut by a waterjet. Alternatively, the core may be formed in an injection moulding process. Preferably, the core may be surface processed, such as machined, before being moulded over with the shell-material. Preferably, the core may be provided separately from the shell in the method. In the method, an endplate may be manufactured having a hybrid material combination, which comprises the core-material and the shell-material.

Thereby, manufacturing speed and design freedom for the core can be increased.

According to a further preferred embodiment, in the method, the shell may be preferably formed in an injection moulding process, such as overmoulding or insert moulding. Alternatively or additionally, in the method the shell may be formed by providing a mould with a mould cavity. Preferably, the mould may comprise one or more port protrusions for forming one or more supply openings in the endplate. The port protrusions may protrude axially along a protrusion axis into the mould cavity from a peripheral edge of the mould cavity. Alternatively or additionally, the mould may comprise one or more front sections for forming a recess section in the shell-surface. The front sections may project from the peripheral mould edge. Alternatively or additionally, the mould may comprise one or more seal sections for forming sealing structures, such as sealing grooves, on the shell-surface. The seal sections may extend from the front sections and/or from the port protrusions. Therein, the seal section may preferably project or recede from the front sections and/or from the port protrusions axially and/or laterally.

Thereby, different plate features can be provided on the shell.

Preferably, in the method the core may be inserted in the mould cavity so that the port protrusions are aligned with through-openings provided in the core. The mould may be filled with the shell-material. The shell-material may solidify.

Thereby, the complexity of the mould and the amount of material needed for the shell can be reduced.

Preferably, the shell, the shell-surface and/or the supply openings may be surface processed after the step of moulding over the core. For instance, they may be machined after this step. Preferably, mechanical anchors, such as the engagement section or the counter-section, may be introduced by roughing operations, by machining grooves and/or by machining dovetails.

Preferably, the over-moulded endplate may be removed from the mould before or after the step of surface processing.

Thereby, surfaces can be provided complying with strict manufacturing tolerances.

Further features, advantages, and objects of the present invention will become apparent for the skilled person when reading the following detailed description of embodiments of the present invention and when taking in conjunction with the figures of the enclosed drawings. The figures show schematically:
- **Figure 1**: an embodiment of an endplate and of a fuel cell stack of the invention,
- **Figure 2**: an exploded rear view of the endplate from Figure 1,
- **Figure 3**: an exploded front view of the endplate from Figure 1,
- **Figure 4A**: a perspective and cutaway view of the endplate from Figure 1,
- **Figure 4B**: a magnified view of a part of the cutaway view from Figure 4A,
- **Figure 5A**: a perspective and cutaway view of the shell of the endplate from Figure 1,
- **Figure 5B**: a front view of the cutaway view of the shell of Figure 5A, and
- **Figure 6**: an embodiment of a method of manufacturing an endplate of the invention.

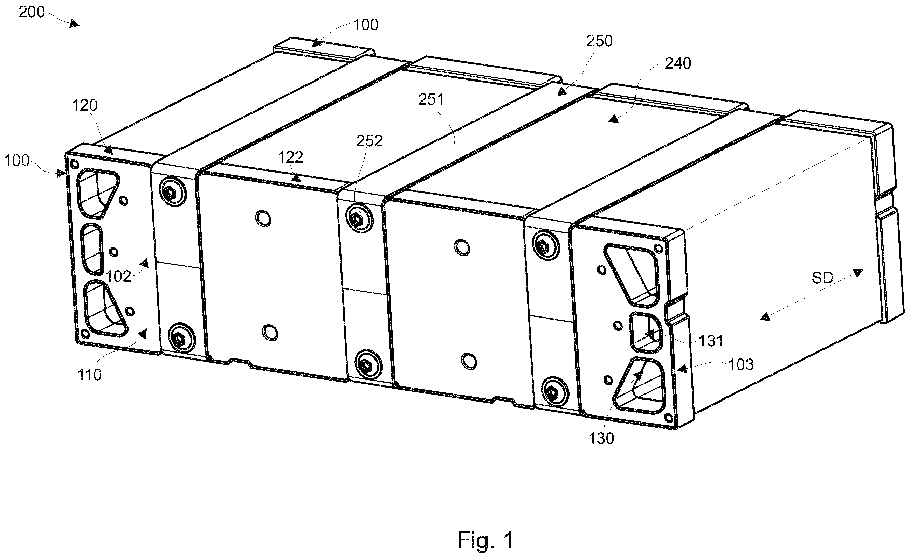

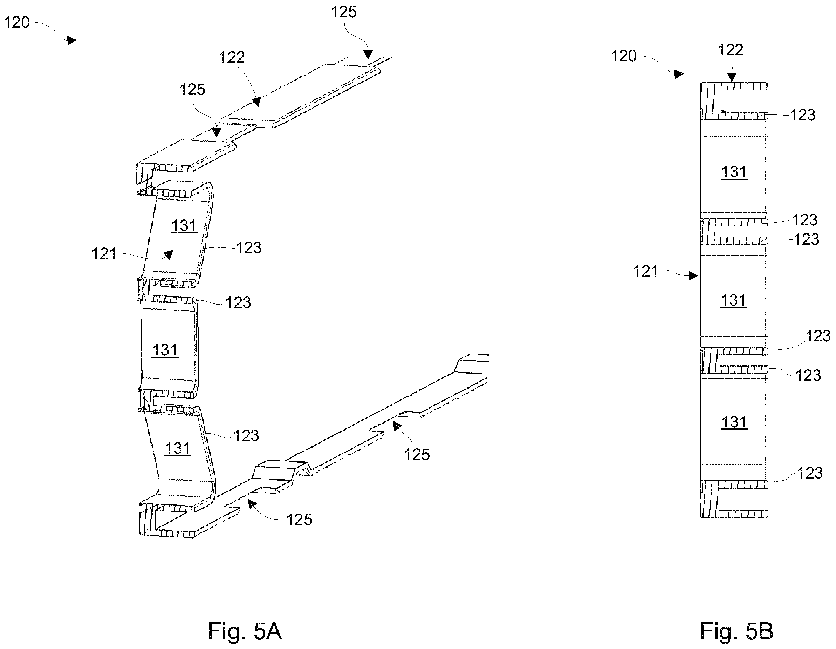

Figures 1 to 6 show different views and aspects of embodiments of the present invention.

Figure 1 exemplarily shows a fuel cell stack 200, which comprises multiple fuel cells 240 that are stacked in a stacking direction SD. The stacking direction SD is exemplarily illustrated in Figure 1 with a double headed arrow. The multiple stacked fuel cells 240 are schematically displayed as a single item in Figure 1. The fuel cell stack 200 may be used for generating power, in which case the fuel cells 240 are operated as fuel cells. Alternatively or additionally, the fuel cell stack 200 may be used for generating fuel, in which case the fuel cells 240 are operated as electrolyser cells. The fuel cell stack 200 comprises an endplate 100 on one or both opposite ends of the fuel cell stack 200 in the stacking direction SD.

Figures 1 to 4B show the endplate 100 exemplarily. The endplate 100 may comprise a substantially flat top surface 101, a substantially flat bottom surface 102 and a peripheral front surface 103 extending therebetween. The top surface 101 and the bottom surface 102 may be parallel to each other. The endplate 100 may have any cross-sectional profile, such as rectangular or circular. The endplate 100 may have a plate height (e.g. a plate extension in the stacking direction SD) smaller than its plate width and plate length.

The endplate 100 comprises at least two different sections, which differ in their stiffness. Namely, the endplate 100 comprises a core 110 for providing stiffness to the endplate 100. Further, the endplate 100 comprises a shell 120 with a shell-surface 121 that is configured so that it can be brought into contact with the fuel cell stack 200. While in Figure 1 a focus is on the core 110 and a part of the shell 120, it is also conceivable to provide the endplate 100 with further sections of different stiffnesses.

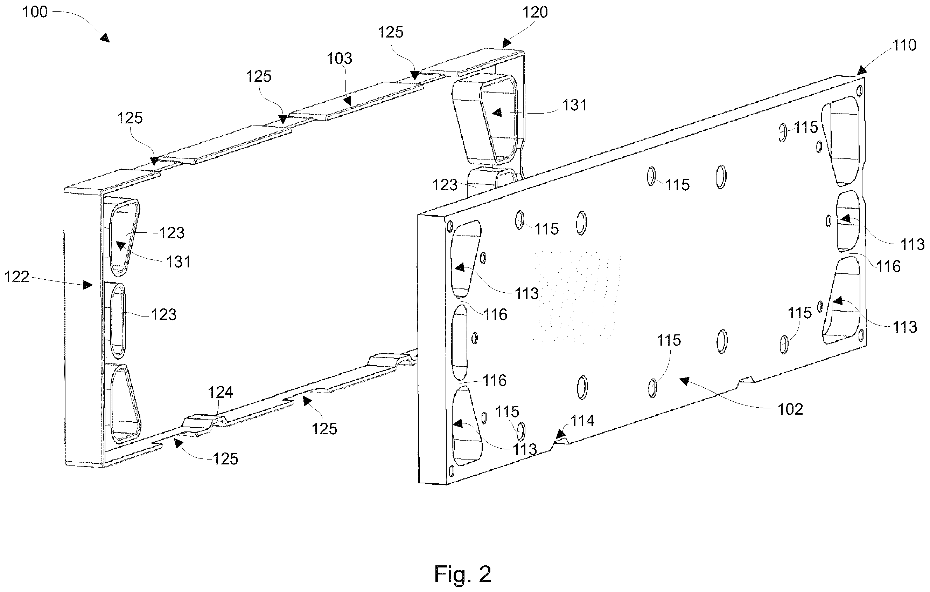

The shell-surface 121 may encompass all surfaces of the shell 120 and can be best observed in Figures 2 to 5B. In these Figures, the shell-surface 121 is exemplarily illustrated as at least the top surface 101 of the endplate 100, and thus, forms a surface that comes into contact with the fuel cell stack 200. For instance, the shell-surface 121 may contact one of the fuel cells 240 and/or any other component of the fuel cell stack 200 that is located at the respective end of the stack of the fuel cells 240. The core 110 is exemplarily shown in the Figures as forming the bottom surface 102 of the endplate 100.

The core 110 has a core-stiffness that is equal to or greater than the shell-stiffness of the shell 120. In particular, the core 110 may have a bending stiffness that is greater than the shell 120. The different stiffnesses may be a result of using different materials for the core 110 and the shell 120. Alternatively or additionally, different cross-sectional profiles may be used for the core 110 and the shell 120, respectively.

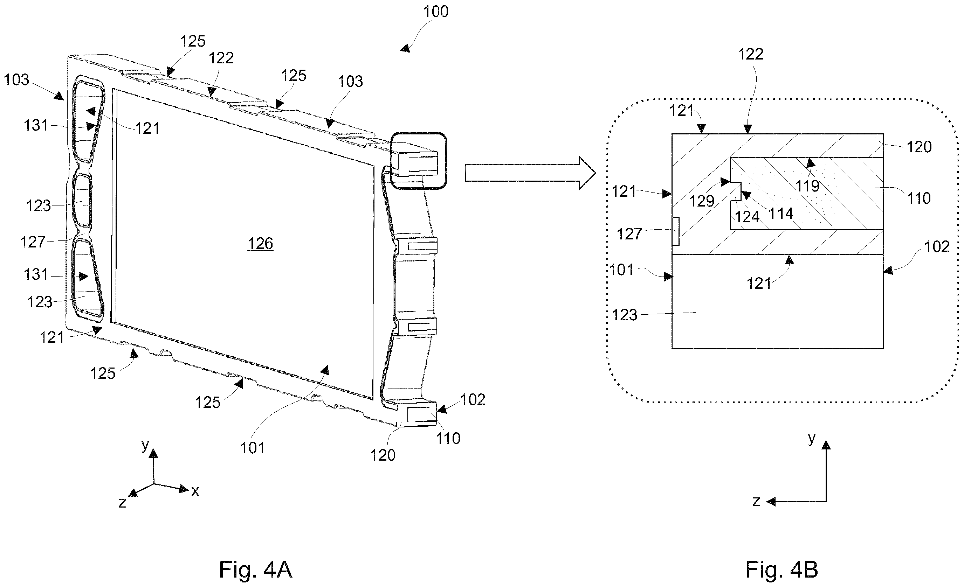

Despite their differences, the shell 120 and the core 110 are provided as a single, preferably continuous, structure because the shell 120 is at least partially moulded over the core 110. This can be observed in Figures 1 to 4B, where the shell 120 is exemplarily illustrated as covering one side of the core 110 entirely. In addition, the perimeter of the core 110 is covered laterally by a circumferential shell-edge 122 of the shell 120, which extends from the shell-surface 121. As result of the over-moulding, as exemplarily shown in Figure 4B, a contour of an inner edge 129 of the cross-sectional profile of the shell 120 may be identical with a contour of an outer edge 119 of the cross-sectional profile of the core 110.

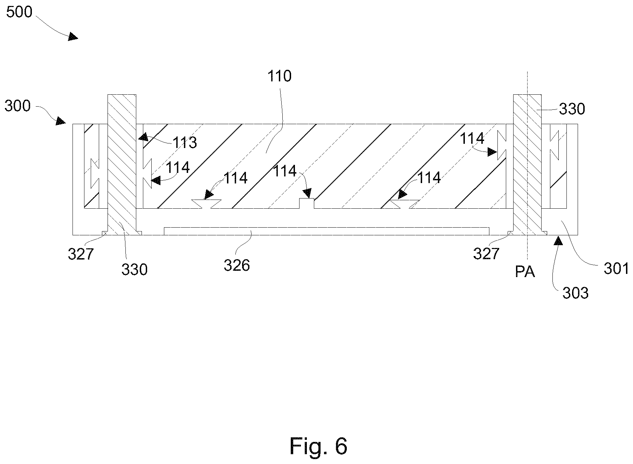

During the over-moulding, chemical bonding may occur between the core 110 and the shell 120. Preferably, the core 110 and the shell 120 may comprise additional mechanical anchoring features to lock the two sections 110, 120 together. These are exemplarily illustrated in Figures 1 to 4B. For instance, the core 110 and the shell 120 may be in form-locking engagement with each other. Thereby, relative movement in any direction, such as the x-, y- and z-directions exemplarily illustrated in Figures 4A and 4B, may be blocked. For this, the shell 120 may comprise one or more engagement elements 124 that engage with corresponding counter elements 114 of the core 110. As exemplarily shown in Figure 2, the shell 120 may comprise the engagement elements 124, which may extend from the circumferential shell-edge 122 inwards with respect to the perimeter. The counter elements 114 may be provided as lateral recesses in the core 110, which correspond with the shape of the engagement elements 124. Figure 4B illustrates further examples of the mechanical anchoring features. In Figure 4B, the core 110 is exemplarily provided with a groove as the counter element 114. The shell 120 is shown with a corresponding engagement element 124, which projects from the inner edge 129 towards the core 110. It is conceivable to provide the engagement elements 124 and the counter elements 114 in various other ways, such as illustrated as optional configuration in Figure 6. However, all of the above configurations are only examples and not to be considered a complete enumeration.

As can be observed further in Figure 1, the endplate 100 may comprise plate features 130, such as supply openings 131 for supplying the stacked fuel cells 240 with reactant gases and coolant, and for removing corresponding exhaust gases. The plate features 130 may be provided in the core 110 and/or the shell 120, and further examples of the plate features 130 will become apparent in the subsequent paragraphs.

Figure 1 further shows a clamping structure 250, through which the endplates 100 and the stacked fuel cells 240 are pressed together. The clamping structure 250 may comprise clamping elements 251, such as clamping straps. The clamping elements 251 may be affixed to the endplates 100 through fixing elements 252 to apply a suitable contact pressure between the stack of the fuel cells 240 and the endplates 100. Thereby, the stack can be kept under compression, where the initial compression force was externally applied and later removed.

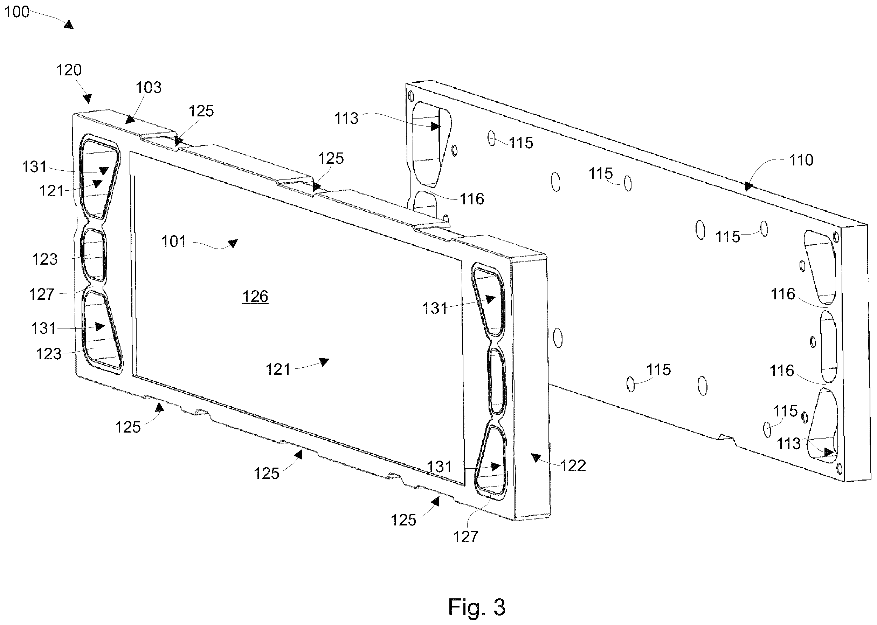

Figures 2 and 3 exemplarily show further details of the core 110. Generally, the core 110 may have any cross-sectional profile, including rectangular or square. Furthermore, the core 110 may be solid or solid with engineered voids. Through-passages through the core 110 in stacking direction SD may be provided as through-openings 113. As exemplarily illustrated, the through-openings 113 may be provided on the core 110 anywhere along its perimeter. In the exemplary illustration, the through-openings 113 may be provided at the lengthwise opposite ends of the core 110. The core 110 may comprise none, one or more through-openings 113. The through-openings 113 may also function as counter elements 114. The core 110 may comprise threaded holes 115 for receiving the fixing elements 252.

Figures 2, 3 and 5 show exemplarily the shell 120. The shell 120 may be any geometric shape but typically may mate to the shape of the core 110. Furthermore, the shell 120 may have an open cross-sectional profile. As exemplarily shown in Figures 2 to 5B, the shell 120 may have a cross-sectional profile with a U-shape. The U-shape may be formed by the shell-surface 121, or more specifically by the circumferential shell-edge 122 on either side of the top surface 101 (which may be comprised by the shell-surface 121).

As can be observed best in Figures 3, 4A and 4B, the shell 120 comprises the shell-surface 121, which is configured for coming into contact with components of the fuel cell stack 200. For this, the shell 120 may be made of an electrically insulating material. Further, the shell-surface 121 may comprise a recess-section 126 that by extending inwards introduces a step in the shell-surface 121. Thereby, a pocket may be formed for receiving a bus plate, for example.

Figures 1 to 5B further illustrate that the circumferential shell-edge 122 may comprise one or more clamping sections 125 for receiving the clamping elements 251. The clamping sections 125 may be provided as material reductions in the circumferential shell-edge 122, respectively.

Figures 1 to 5B further show that passages through the shell 120 may be delimited by multiple separation walls 123, which may form the supply openings 131 in the endplate 100. One or more of the separation walls 123 may extend the shell-surface 121. The separation walls 123 may extend transversely to the top surface 101 with a supply port length. The supply port length may be chosen depending on the requirements of the fuel cell stack 200. For instance, the supply port length may be set longer or smaller than the length of the circumferential shell-edge 122. The separation walls 123 may project from the shell-surface 121 inwards and/or outwards with respect to the core 110. Thereby., the separation walls 123 may form connecting portions to a conduit system inside the fuel cell stack 200. Each of the supply openings 131 may be provided with a sealing section 127, such as a groove. Sealing rings may be placed in the sealing section 127. Alternatively, the sealing section 127 may provide a sealing edge.

Figure 6 further exemplarily shows an exemplary step of a method of manufacturing 500 the endplate 100. Naturally, other configurations of the method 500 are conceivable so that this illustration is to be understood as an example of one possible configuration only.

As shown in Figure 6, in one step of the method 500, the core 110 is provided. The core 110 may be provided by machining or cutting a bulk material. Alternatively, the core 110 may be formed in a first injection moulding process. Alternatively, it is also conceivable that the core 110 may be formed by pressing pre-impregnated composites or by compression moulding, using resin and reinforcement materials and/or fibres. These reinforcement materials may be solid and/or hollow and may be oriented according to engineering requirements for flexural stiffness and strength. As a general addition or alternative to the above configurations, the core 110 may comprise an interior lattice structure. Thereby, weight and stiffness can be optimized. Optional surface processing of the core 110 may be completed thereafter.

Preferably, mechanical anchors may be introduced by roughing operations or machining operations. For this, the core 110 may be provided with the counter elements 114. In Figure 6, the counter elements 114 are exemplarily illustrated as grooves, some of which may correspond with the shape of dovetails.

The core 110 may then be placed in a mould cavity 301 of a mould 300 for injection moulding. The mould 300 may comprise port protrusions 330 for forming the supply openings 131 in the endplate 100. The port protrusions 330 may protrude axially along a protrusion axis PA into the mould cavity 301 from a peripheral edge 303 of the mould cavity 301. The port protrusions 330 may comprise a circumferential extension that is smaller than the through-openings 113 of the core 110 in order to form the separation walls 123 during moulding. Further, the mould 300 may comprise front sections 326 for forming the recess section 126 in the shell-surface 121. Additionally or alternatively, the front sections 326 may be comprised of the current collector bus plate such that it is included in the injection moulding process and may become a permanent part of the endplate 100. Also, the mould 300 may comprise seal sections 327 for forming sealing structures on the shell-surface 120. The seal sections 327 may extend laterally from the port protrusions 330.

When inserting the core 110 in the mould cavity 301, the port protrusions 330 may be aligned with the through-openings 113 of the core 110. This is illustrated in Figure 6.

Then, the mould 300 may be filled with a shell-material the same may be solidified. Thereby, the shell 120 is formed with the shell-surface 121 by over-moulding the core 110 at least partially with the shell-material. It is conceivable that the shell 120 may be formed in a different injection moulding process than the core 110, if this applicable to the manufacturing process of the core 110.

The so formed shell 120 and the core 110 have different stiffnesses. Therein, the properties of the shell 120 and the core 110 may differ in material stiffness, flexural strength, electrical conductivity, water absorption, and hydrogen permeation, for example.

Furthermore, one or more areas of at least the shell-surface 121 may be finished, such as post-machined, in a machining process. This is, for instance, if a different surface finish is required than what can be achieved during the over-moulding. The over-moulded endplate 100 may be removed from the mould 300 before or after such finishing.

The invention is not limited by the embodiments as described hereinabove, as long as covered by the appended claims. All features of the embodiments described hereinabove can be combined in any possible way and be provided interchangeably.

### Reference signs

- 100: endplate
- 101: top surface
- 102: bottom surface
- 103: peripheral front surface
- 110: core
- 113: through-opening
- 114: counter element
- 115: threaded holes
- 116: connection section
- 119: outer edge
- 120: shell
- 121: shell-surface
- 122: circumferential shell-edge
- 123: separation wall
- 124: engagement element
- 125: clamping section
- 126: recess section
- 127: sealing section
- 129: inner edge
- 130: plate features
- 131: supply opening (port)

- 200: fuel cell stack
- 240: stack of fuel cells
- 250: clamping structure
- 251: clamping elements
- 252: fixing elements
- SD: stacking direction

- 300: mould
- 301: mould cavity
- 303: peripheral mould edge
- 326: front sections
- 327: seal sections
- 330: port protrusion

- 500: method of manufacturing

## Claims

1. Endplate (100) for compressing a fuel cell stack (200), **characterized by**
- a core (110) for providing stiffness to the endplate (100), comprising a core-stiffness, and
- a shell (120) with a shell-surface (121) for contact with the fuel cell stack (200), the shell (120) comprising a shell-stiffness that is smaller or equal to the core-stiffness,
wherein the shell (120) is at least partially moulded over the core (110).

2. Endplate (100) according to claim 1, **characterized in that**
the core-stiffness is a core-material stiffness and the shell-stiffness is a shell-material stiffness, wherein preferably the respective material stiffnesses are a bending stiffness of the core-material and a bending stiffness of the shell-material.

3. Endplate (100) according to claim 1 or claim 2, **characterized in that**
the endplate (100) comprises a singular one-piece continuous structure, and/or
the shell (120) is moulded over the core (110) such that the core (110) is covered by the shell-surface (121) on at least one end and preferably entirely along its perimeter.

4. Endplate (100) according to any one of preceding claims 1 to 3, **characterized by**
the shell-surface (121) being configured to provide a sealing surface between
the endplate (100) and a component of the fuel cell stack (200) when the endplate (100) is installed on the fuel cell stack (200), and/or
the shell (120) being made of an electrically insulating material, and/or
the shell-material comprising plastic, injection moulded thermoplastic, thermoformed plastic, such as polyphenylene sulphide, a composition comprising polystyrene and polyphenylene oxide, a composition comprising polystyrene and polyphenylene ether, polyether ether ketone, or an epoxy-based laminate.

5. Endplate (100) according to any one of preceding claims 1 to 4, **characterized by**
the core (110) comprising as the core-material a non-plastic material, such as metal, like aluminium or steel, or a composite containing glass and/or carbon fibre weaves, or comprising at least some of the materials used for the shell (120).

6. Endplate (100) according to any one of preceding claims 1 to 5, **characterized by**
at least one out of the core (110) and the shell (120) comprising at least one engagement-section (114, 124), and the respective other comprising a correspondingly complementary counter-section (114, 124) for providing a form fit locking connection.

7. Endplate (100) according to any one of preceding claims 1 to 6, **characterized by**
the endplate (100) comprising a top surface (101), a bottom surface (102) and a peripheral front surface (103) extending therebetween, wherein the shell-surface (121) comprises at least the top surface (101) and the core (110) comprises the bottom surface (103), and/or
the shell (120) comprising, at least partially, a cross-sectional profile that is open on one side, preferably a U-shaped cross-sectional profile, and/or
the core (110) comprising, at least partially, a closed, preferably rectangular cross-sectional profile, wherein preferably a contour of an inner edge (129) of the cross-sectional profile of the shell (120) corresponds with a contour of an outer edge (119) of the cross-sectional profile of the core (110).

8. Endplate (100) according to preceding claim 7, **characterized by**
the endplate (100) comprising one or more supply openings (131) that extend longitudinally along an extension direction through the shell-surface (121) and through the core (110) to provide a through-passage between the top surface (101) and the bottom surface (102), wherein the supply openings (131) preferably extend on the shell-surface (121) at least partially along the perimeter of the endplate (100).

9. Endplate (100) according to preceding claim 8, **characterized by**
the shell (120) comprising one or more separation walls (123) that define an interior surface of the supply openings (131), wherein preferably each of the supply openings (131) is enclosed by a different separation wall (123), wherein the core (110) comprises corresponding through-openings (113) for receiving the separation walls (123).

10. Endplate (100) according to any one of preceding claims 7 to 9, **characterized by**
the shell-surface (121) comprising a recess-section (126) that at least partially extends inwards in a direction from the top surface (101) towards the bottom surface (102).

11. Fuel cell stack (200), preferably solid polymer electrolyte fuel cell stack,
**characterized by**
a stack of fuel cells (240) arranged in series, the stack (240) being covered on at least one side by an endplate (100) according to any one of the preceding claims.

12. Method of manufacturing (500) an endplate (100) for compressing a fuel cell stack (200), **characterized by**
- providing a core (110) for providing stiffness to the endplate (100) from a core-material, the core (110) having a core-stiffness, and
- forming a shell (120) with a shell-surface (121) for contact with the fuel cell stack (200) by over-moulding the core (110) at least partially with a shell-material, the shell (120) having a shell-stiffness that is smaller or equal to the core-stiffness.

13. Method (500) of claim 12, **characterized by**
- providing the core (110) by processing, preferably machining or waterjet cutting, a bulk material or by forming the core (110) in an injection moulding process; and/or
- surface processing, preferably machining, the core (110) before being moulded over with the shell-material.

14. Method (500) of claim 12 or claim 13, **characterized by**
- forming the shell (120) preferably in an injection moulding process by
∘ providing a mould (300) with a mould cavity (301), wherein the mould (300) comprises
▪ one or more port protrusions (330) for forming one or more supply openings (131) in the endplate (100), wherein the port protrusions (330) protrude axially along a protrusion axis (PA) into the mould cavity (301) from a peripheral edge (303) of the mould cavity (301);
▪ one or more front sections (326) for forming a recess section (126) in the shell-surface (121), which project from the peripheral mould edge (303); and
▪ one or more seal sections (327) for forming sealing structures on the shell-surface (120), which extend from the front sections (326) and/or the port protrusions (330), preferably by projecting or receding therefrom, respectively;
∘ inserting the core (110) in the mould cavity (301) so that the port protrusions (330) are aligned with through-openings (113) provided in the core (110);
∘ filling the mould (300) with the shell-material;
∘ solidifying the shell-material; and/or
- surface processing, preferably machining, the shell (120), preferably the shell-surface (121) and/or the supply openings (131), after moulding over the core (110); and
- preferably removing the over-moulded endplate (100) from the mould (300), preferably before or after the step of surface processing.

15. Method (500) of any one of claims 12 to 14, **characterized in that**
the core (110) is provided separately from the shell (120), and/or
in the method (500) an endplate (100) with a hybrid material combination, comprising the core-material and the shell-material, is manufactured.
